# EUROPEAN PATENT SPECIFICATION

(11) **EP 0 225 647 B1**
(45) Date of publication and mention of the grant of the patent: **24.03.1993**
(21) Application number: 86117246.8
(22) Date of filing: 11.12.1986
(51) Int. Cl.: G11B 7/24, G11B 7/26

(54) **High density recording medium**
Material für Aufzeichnung mit hoher Dichte
Milieu d'enregistrement à haute densité

(30) Priority: 13.12.1985 JP 279207/85
(43) Date of publication of application: 16.06.1987
(73) Proprietor: DAICEL CHEMICAL INDUSTRIES, LTD., Sakai-shi Osaka-fu 590 (JP)
(72) Inventor: Okabayashi, Norio, Himeji-shi Hyogo-ken (JP)
(74) Representative: Boeters, Hans Dietrich, Dr.

(56) References cited:
- EP-A- 0 080 884
- EP-A- 0 175 408
- DE-A- 2 118 170
- CHEMICAL ABSTRACTS, vol. 73, no. 22, 30 November 1970, page 394, ref. no. 114995r; Columbus, Ohio, US; A. L. HARRIS et al.: "Continuous wave laser recording on metallic thin film" & IMAGE TECHNOL. 1970, 12(3), 31-5
- PATENT ABSTRACTS OF JAPAN, vol. 3, no. 98 (E-131), 18 August 1979, page 97

## Description

### 3. Detailed Description of the Invention

### (Industrial Utilization Field)

The present invention relates to a recording medium for use in laser beam recording and more particularly to a high density recording medium for recording digital and/or analog information, using a laser beam focused to a diameter of several hundred micron to submicron (10³µm < beam diameter <10⁻¹µm). Further, it is concerned with a high density recording medium for use as a WORM or DRAW type optical disc, optical card or image recording material.

### (Prior Art)

High density information recording, media such as WORM type optical disc and optical card employ a laser beam for inducing physical deformations, forming pits, or causing changes in phase, in refractive index or in absorbability in a recording thin-film layer formed on a substrate, to effect digital or analog information recording.

For the formation of such recording thin-film layer, various materials have already been known. Metallic thin films have long been used ( see Japanesse Patent Publication No. 2774/1967 and Sov. J. Quant. Electron, 2 [6], pp. 555-558, 1973), but today tellurium-based alloy films, oxide films Or dispersion films, as well as dispersion films of various dyes and photopolymers, are mainly studied (see "Rearch of the Trend of Optical Disc Technique", Hikari Sangyo Gijutsu Shinko Kyokai (foundation), published in March 1985, pp. 58 - 69).

However, since the above metallic thin film is formed by a physical vapor deposition process, not only the cost is increased but also it is necessary to increase power (laser power) required for recording, that is, required for making deformation or forming pits on the metallic thin film with laser beam, resulting in that it is impossible to effect recording with a semiconductor laser and hence it is required to use a high energy laser such as He-Ne laser or Ar laser as recording means. Consequently, it is impossible to reduce the size of the recording apparatus and both power consumption and cost increase. Further, since recording pits formed by the radiation of laser are irregular in shape, noises are high and S/N ratio lowers to a quite impratical extent. On the other hand, a tellurium-based recording film permits the formation of uniform pits easily with a semiconductor laser, so it has already been used practically s a recording material in media for filing systems. But the tellurium-based recording film is formed by a physical vapor deposition process in a vacuum system, such as sputtering, resulting in that not only the manufacturing cost is increased but also the reflectance lowers due to the oxidation of tellurium with oxygen in air and the S/N ratio lowers with the lapse of time. Thus there remain problems in point of stability with time. Further, the dye dispersion type recording film can be formed easily by a wet process, for example, using a spin coater, but a completely reliable film has n-ot been developed yet because of its essential problem of deteriorated reproduction with laser beam.

Under the circumstances, there has been a strong demand for a high density recording medium capable of being obtained inexpensively and having a high long-term stability or reliability.

### (Object of the Invention)

Accordingly, it is the object of the present invention to provide a novel high density recording medium capable of being produced far less expensively than conventional like media, permitting recording with a semiconductor laser having a small size and a low output, and superior in recording stability or long-term stability.

### (Construction of the Invention)

The high density recording medium of the present invention is expressed in claim 1 whose preamble reflects the prior art from DE-A-2 118 170. The electroless plating in the present invention is to be distinguished from the physical development according to EP-A-0 080 884 which necessitates first a seperate development layer containing appriopriate metal physical development nuclei.

EP-A-0 175 408, which falls within the terms of Art 54 (3) EPC and is thus not relevant to the question of inventive step, already describes electroless plating of Ni. This layer, however, does not serve for optical recording, but as a first layer onto which another layer of a different alloy is deposited. Into this second layer an information pattern can be pressed mechanically.

The substrate may be formed of any known material if only it serves as a support for the recording thin-film layer. More particularly, in the case of a recording medium for surface reading, there may be used a metallic plate such as an aluminium plate or a ceramic substrate, but generally a plastic film, sheet or plate is preferred. In the case of a transmission type recording medium which reads recorded information through a substrate, or a back reflection type recording medium which reads recorded information reflectively through a substrate, it is necessary that the substrate be transparent. And in this case, the substrate may be formed of glass, a light transmitting ceramic material, plastic, or the like. Particularly, plastics of low cost superior in handling performance are preferred. Examples are acrylic resins, polycarbonate resins, PET resins, polyvinyl chloride resins, polyester resins and epoxy resins. The thickness and shape of the substrate can be selected suitably according uses. In the case of an optical disc shape, the thickness and diameter can be set at about 1 mm and about 2 to 40 cm, respectively. In the case of an optical card shape, the thickness and size can be set at about 4 x 8 mm, respectively. In the case of an optical tape, the thickness and width can be set at about 30µm and about 8 to 40 mm, respectively. Further, in the case of use as an image recording medium, there may be adopted any suitable size.

As a recording method utilizing the aforesaid radiation of laser beam, it is usually desirable to use an ablative type recording method. But it is not always necessary to make pits to a complete extent. There may be adopted a recording method in which a recording film undergoes deformations or changes in phase or in condition upon irradiation of laser beam. Which recording method is to be adopted has a bearing on a playback method used and can be determined in consideration of a sensitivity (e.g. S/N ratio) required at the time of playback and a reading method (e.g. transmission type or reflection type). Also as to the diameter of laser beam, it can be selected suitably according to uses. In the case of a high density information recording medium, laser beam is focused to a spot of the order of sub microns (e.g. 1 - 0.8 µm), and in the case of an optical card or the like, it is possible to form a spot (very fine spot) of the order of several ten microns (e.g. about 20 µm). The beam diameter is also determined in consideration of a playback method used. The shape and size of spots (e.g. pits) on the recording thin film layer recorded with laser beam vary according to whether an input signal is a digital signal or an analog signal.

The thickness of the recording thin-film layer differs depending on the use and the output of laser used, but in the case of high density information recording media, there generally is employed a thickness in the range of about several thousand to several hundred Å (1Å = 0,1mm). Care must be excercised in the selection of the film thickness because the film thickness has a great influence on recording and reproducing characteristics.

The present invention however exhibits thin-film layer of about 200 to 1000 Å.

As previously noted, it is well known to form pits in a thin metallic film using a laser beam to record information (see, for example, Japanese Patent Publication No. 2774/1967). However, a recording medium using such thin metallic film recording layer is not in practical use even today mainly for the following reasons. 1) The laser power required for recording is so high that with a semiconductor laser (output: 10 - 20 mW) it is impossible to effect recording (for example, by pit or bubble formation); 2) the thin film forming method is limited to a physical vacuum deposition method such as evaporation or sputtering, resulting in increase of equipment investment and running cost to an industrially unutilizable extent; and 3) recording and reproducing characteristics, particularly S/N ratio, are too poor for practical use.

The present inventor has found that all of the above-mentioned drawbacks can be overcome by forming the aforesaid thin metallic film recording layer by electroless plating. At the first glance, it is presumed or expected that two metal thin films deposited on a substrate by physical deposition and by electroless plating will show or have the same result in recording property.

However, a thin film actually formed on a substrate according to a physical vapor deposition method such as evaporation or sputtering are entirely different in properties from that formed by electroless plating.

Consequently, both are quite different in recording and reproducing characteristics, and in an optical recording using a semiconductor laser as a light source, only the thin film prepared according to the electroless plating method is employable while the thin film formed by the physical vapor deposition method is not employable. The reason is unknown at present, but is presumed to be because of difference in structure (e.g. crystal structure or metallic bonding structure) or in composition (the film formed by the vapor deposition method is constituted mainly by metal element alone whereas the film formed by the electroless plating method contains non-metallic elements such as phosphorus and boron in addition to metal element) between the two films.

The "electroless plating", which is a feature of the present invention, is of a concept against electroplating. It is also called a chemical plating in which a metal is deposited on a base material by a chemical substitution or reduction without using electric energy. This electroless plating method per se is well known and it has been used for decoration, for imparting electroconductivity to the surface of a non-conductor, for making a magnetic recording medium and making a circuit according to an additive method, etc. However, as far as the applicant in the present case knows, it has not been known to use a thin film formed by the electroless plating method as a recording/reproducing medium using a laser beam.

As metals capable of being subjected to such electroless plating there are known nickel, cobalt, chromium, gold, silver, platinum, tin, copper, zinc, lead and indium. In the present invention, e.g. Nickel is used and has been demonstrated that a recording layer formed by electroless nickel plating is superior in film forming charateristic, recording characteristic and oxidation resistance.

The film thickness of the recording thin-film layer formed by the electroless plating differs depending on the kind of laser and the recording/reproducing method used.

It has become clear that the electroless nickel-plated thin film formed according to a preferred embodiment of the present invention should have a thickness in the range of 200 to 1,000 Å in the case of making recording and reproducing from an opposite face side of a plastic substrate using a semiconductor laser and that this thickness range is important in attaining good recording and reproducing characteristics. If the film thickness is smaller than 200 Å, it will be impossible to form a uniform plated film and the reflectance will be low, resulting in that the thin film cannot be used as a recording film. In the film thickness range of 200 to 700 Å, preferably about 300 to about 600 Å, it is possible to form pits which are desirable as a perforated recording medium, and in the film thickness range of about 600 to 1,000 Å, there will be formed spots by deformation and/or change of state although pits will not be formed, whereby good recording and reproducing charactristics are attained. However, if the film thickness exceeds 1,000 A, it will become difficult to record information on the plating film with a semiconductor laser; besides, there occurs separation of the film due to enhanced film stress.

The method of forming a thin metallic film on a substrate according to the electroless plating is generally carried out through the following steps:
Defatting-Water washing-Sensitizing treatment-Water washing-Activating treatment-Water washing-Electroless plating

The sensitizing treatment is generally performed by immersing a substrate in an aqueous solution of a reducing metallic salt, e.g. stannous chloride and hydrochloric acid. The activity treatment is performed by immersing a substrate in an aqueous solution of a noble salt, e.g. palladium chloride, and hydrochloric acid. These pretreatments per se are well known and constitute no part of the invention, so detailed explanations will be omitted.

As methods for the electroless plating there are an immersion method in which a substrate is immersed in a plating bath to effect plating and a spray method in which a metallic salt solution and a reducing agent are sprayed simultaneously onto a substrate to effect plating. The latter is preferred from the standpoint of stability of the bath life and productivity, but both methods can be adopted in the present invention.

The plating bath used in the electroless plating consists principally of a metallic salt, a reducing agent and a pH buffer. Generally employed as the metallic salt is a chloride, sulfate or nitrate of a metal. Examples of the reducing agents are hypophosphites, anhydrous sulfites, formaldehyde, as well as precursors and derivatives thereof, alkali metals borohydride, amine borane and hydroquininone. As examples of the pH buffer are mentioned organic acids such as acetic, citric and succinic acids and salts thereof,as well as of inorganic acids such as sulfuric and hydrochloric acids. If necessary, there may be further added a complexing agent, e.g. Rochelle salt, a pH adjustor, e.g. lactic acid, a surfactant, e.g. organic phosphate ester, and cyanide ion. These components differ depending on the metal to be plated.

The electroless metal-plated thin-film recording layer prepared according to the present invention can be subjected to recording and playback in a known manner. More specifically, the present invention is applicable to all of a surface reading method in which recording and reproducing are performed from one side of a substrate on which a recording layer is formed, a back reading method in which recording and reproducing are performed from the other side of the substrate opposite to the recording layer side, a reflection type recording/reproducing method including a combination of those methods, and a transmission type recording/reproducing method in which recording and reproducing are performed with light passing through a substrate. Recording is generally performed according to an ablative type recording method in which pits are formed in a recording film using a laser beam. But, without formation of complete pits, there may be induced fine deformations on the recording film and reading may be done by contrast of each deformed spot with unirradiated area. Either of digital and analog signals may be used as an input signal. Further, the recording layer in the present invention can also be used as ROM (Read Only Memory). More particularly, either electroless plating is performed on a substrate trhough a mask with information formed pits, or after forming a film throughout the surface of a substrate by electroless plating, the film is etched locally selectively through a print or a mask to record information as spots in the elelctroless plating layer on the substrate. This method is useful for ROM card or ROM disc which requires reproducing the same information in large quantities.

In actually using the recording medium of the present invention, it is necessary to provide a protective layer on the recording film for protecting the recording layer from dust in the air or fingerprints of the user. In the surface reading type and the transmission type, a transparent cover is disposed, while in the back reading type, either two substrates are positioned inside to provide an air sandwich structure, or a protective sheet or film may be disposed or adhered to the recording film side.

Further, recording and reproducing characteristics can be improved by annealing a thin film formed by electroless plating, at an appropriate temperature.

### 4. Brief Description of the Drawings

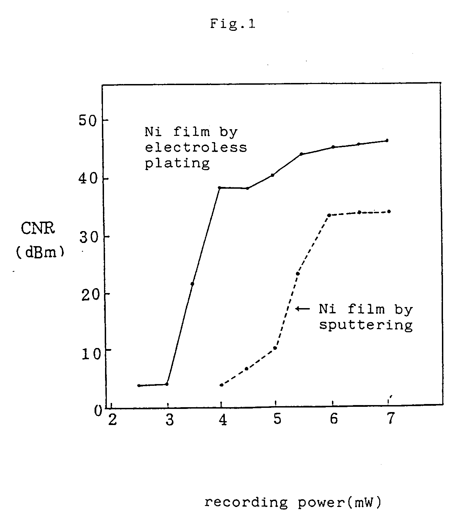

Fig. 1 illustrates the recording property of a recording film formed by electroless plating according to the present invention and a nickel film formed by sputtering as a comparative example in terms of CNR (dB) versus writing power (mW), in which solid line indicates the film of the present invention and dotted line indicates the film of the comparative example.

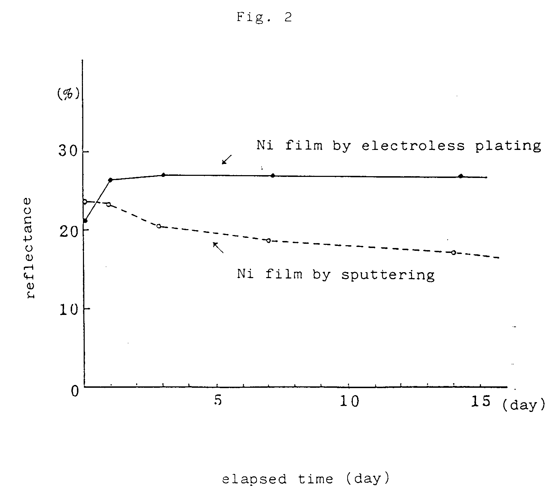

Fig. 2 illustrates changes of reflectance versus elapsed time (day) under the conditions of 60°C, 90% RH for evaluating how films change with the lapse of time, in which solid line indicates the present invention and dotted line indicates a comparative example.

The following examples are given to further illustrate the present invention.

### (Example 1)

### -Making Optical Disc by Immersion Method-

A polycarbonate disc substrate (130 mm dia. by 1.2 mm thick) with tracking groove (1.6 µm pitch) was immersed in a defatting solution (prepared by Okuno Seiyaku) consisting principally of SnCl₂ and HCl for 15 seconds, followed by washing, then it was immersed in an activity solution (prepared by Okuno Seiyaku) consisting principally of PdCl₂ and HCl for 15 seconds, followed by washing. After these pretreatmets, the substrate was immersed in a plating bath of the following composition for 40 seconds from the beginning of plating. The plating bath was maintained at 41 - 43°C and plating was performed under application of supersonic waves in order to improve the surface accuracy Two such substrates were put one upon another and their outer peripheries were sealed to obtain an optical disc of two substrate having a plating film only on one side.

| Plating Bath Composition | |
|---|---|
| Nickel sulfate (special grade or guaranteed reagent) | 26 g/l |
| Sodium hypophosphite | 21 g/l |
| Ammonium chloride | 3 g/l |
| Sodium acetate | 5 g/l |
| Boric acid | 12 g/l |
| pH = 5.5 | |

The optical disc thus obtained had a uniform electroless-plated nickel layer having a thickness of 350 Å on the surface thereof.

### -Performance Evaluation of the Optical Disc-

The above optical disc was evaluated for performance as a DRAW disc using a CN measuring machine, under rotation at 900 rpm with a semiconductor laser (λ= 830 nm). Performance of the resulting CNR (recording frequency = 1 MHZ, VWB = 30 KHZ) relative to recording power (mW) is as indicated by solid line in Fig. 1. As can be seen from Fig. 1, the optical disc for DRAW of the present invention has a recording and reproducing charateristic of 40 to 45 dB in terms of CN ratio at a low output of 4 to 7 mW using a semiconductor laser.

This optical disc was allowed to stand under the environmental conditions of 60°C and 90% RH and thereafter its performance was evaluated in terms of changes in reflectance. Results are as indicated by solid line in Fig. 2. As can be seen from Fig. 2, the electroless-plated nickel film formed according to the present invention exhits little change in performance after the lapse of one day (see comparative Example 1).

### (Comparative Example 1)

A thin nickel film was formed on the same polycarbonate disc substrate as that described in Example 1 by sputtering technique using a nickel target. The thickness of this thin nickel film was set at 350 Å like Example 1. Both the thin nickel film obtained in Example 1 and that obtained in Comparative Example 1 were of about the same reflectance of 25% or so.

The optical disc for DRAW thus obtained was measured for CNR under the same conditions using the same CN measuring machine as in Example 1. Results are as indicated by dotted line in Fig. 1. A look at Fig. 1 shows that the nickel film formed by a physical vapor deposition method such as sputtering is too low in CNR and is substantially not applicable to a recording method using a semiconductor laser of a low output of 7 mW or so for recording information. Further, like Example 1, the above disc having the film formed by sputtering was allowed to stand at 60°C, 90% RH. Results are as indicated by dotted line in Fig. 2, from which it is seen that the film formed by sputtering exhibits a marked deterioration with the lapse of time.

### (Example 2)

### -Making Optical Disc by Spray Method-

The same polycarbonate disc substrate as that described in Example 1 was pretreated under the same conditions as in Example 1 and then an electroless-plated nickel film was formed thereon by a spray method. More specially, the following solution A and B were first prepared:

| Solution A | |
|---|---|
| NiCl₂.6H₂O | 3 g |
| NH₃Cl | 6 g |
| H₂O | 1 l |

| Solution B | |
|---|---|
| NaBH₄ | 0.4 g |
| NaOH | 2.0 g |
| H₂O | 1 l |

Then, the solution A and B were sprayed simultaneously onto the surface of the disc substrate under rotation of the substrate at 200 rpm, at spraying rates of 17 ml/min and 27 ml/min, respectively. The spray was continued for about 60 seconds to obtain a plating film having a thickness of 300 Å.

The optical disc for DRAW thus obtained was evaluated using the same measuring machine as in Example 1. There was obtained a CNR of 46 dB at a writing power of 7 mW.

### (Example 3)

Using two solutions of the following compositions, an electroless-plated thin cobalt film was formed by a spray method like Example 2:

| Solution A | |
|---|---|
| COCl₂.6H₂O | 3 g |
| NH₃Cl | 3 g |
| H₂O | 1 l |

| Solution B | |
|---|---|
| NaBH₄ | 0.4 g |
| (CH₃)₄NOH | 5 g |
| H₂O | 1 l |

The solution A and B were sprayed simultaneously for 40 seconds at rates of 17 ml/min and 27 ml/min, respectively, to obtain the cobalt film which was 600 Å in thickness.

The optical disc for DRAW thus obtained was founed to be 7 mW in witing power and 38 dB in CNR, the latter being ascribable to a deformation recording because of the large thickness of the film.

### (Example 4)

Using the following two solutions, an electroless-plated thin nickel-cobalt film was formed by the same method as in Example 2:

| Solution A | |
|---|---|
| NiCl₂.6H₂O | 6 g |
| CoCl₂.6H₂O | 6 g |
| NH₃Cl | 12 g |
| H₂O | 1 l |

| Solution B | |
|---|---|
| NaBH₄ | 0.2 g |
| NaOH | 1 g |
| H₂O | 1 l |

- Spraying rate :: Solution A = 17ml/min
Solution B = 27ml/min
- Spraying time :: 30 seconds
- Film thickness :: 550 Å

The thin film obtained above was subjected to XRF analysis to fine that the proportion of Co and that of Ni in the film were 85% and 15%, respectively.

The optical disc for DRAW thus obtained was found to be 6 mW and 46 dB in terms of writing power and CNR, respectively.

## Claims

1. A high density recording medium for recording information by means of a laser beam, comprising a substrate and a recording layer which recording layer is deposited on said substrate by electroless deposition from an aqueous solution
characterized in that
said recording layer is deposited from a solution containing nickel and/or cobalt ions so that said recording layer consists of nickel and/or cobalt and has a thickness of about 200 to 1000 Angstroms (i.e. 20 to 100nm).

2. A high density recording medium as set forth in Claims, wherein a protective layer is formed on an outer surface of said recording thin-film layer.

3. A high density recording medium as set forth in Claim 2, wherein said protective layer is a thin film formed mainly from gold by electroless plating.

4. A high density recording medium as set forth in Claim 2, wherein said protective layer is an organic coating.

5. A high density recording medium as set forth in Claim 1, wherein said recording is a digital information recording and/or an analog information recording, using a spot of several hundred micron to submicron (10³µm - 10⁻¹µm)

6. A high density recording medium as set forth in Claim 1, wherein said recording is an image recording.

7. A high density recording medium as set forth in Claim 1, wherein said substrate is formed of a transparent plastic.

8. A high density recording medium as set forth in Claim 1, wherein said recording thin-film layer is a thin film obtained by annealing a thin film resulting from electroless plating.

9. A high density recording medium as set forth in Claim 1, wherein said recording medium is an optical disc.

10. A high density recording medium as set forth in Claim 1, wherein said recording medium is an optical card.

## Patentansprüche

1. Aufzeichnungsmedium mit hoher Dichte zum Aufzeichnen von Information mittels eines Laserstrahls, welches ein Substrat und eine Aufzeichnungsschicht umfaßt, wobei die Aufzeichungsschicht auf dem Substrat durch stromlose Abscheidung aus einer wäßrigen Lösung abgeschieden ist, dadurch gekennzeichnet, daß die Aufzeichnungsschicht aus einer Lösung abgeschieden wird, die Nickel- und/oder Cobaltionen enthält, so daß die Aufzeichnungsschicht aus Nickel und/oder Cobalt besteht und eine Dicke von etwa 200 bis 1.000 Å (d. h. 20 bis 100 nm) aufweist.

2. Aufzeichnungsmedium mit hoher Dichte nach Anspruch 1, worin eine Schutzschicht auf einer Außenfläche der Dünnfilmaufzeichnungsschicht gebildet wird.

3. Aufzeichnungsmedium mit hoher Dichte nach Anspruch 2, worin die Schutzschicht ein dünner Film ist, der hauptsächlich aus Gold durch stromloses Überziehen gebildet wird.

4. Aufzeichnungsmedium mit hoher Dichte nach Anspruch 2, worin die Schutzschicht ein organischer Überzug ist.

5. Aufzeichnungsmedium mit hoher Dichte nach Anspruch 1, worin das Aufzeichnen das Aufzeichnen digitaler Information und/oder das Aufzeichnen analoger Information unter Verwendung eines Lichtpunkts einer Größe von einigen hundert µm bis zum Submikronbereich (10³ µm bis 10⁻¹ µm) ist.

6. Aufzeichnungsmedium mit hoher Dichte nach Anspruch 1, worin das Aufzeichnen ein Aufzeichnen eines Bildes ist.

7. Aufzeichnungsmedium mit hoher Dichte nach Anspruch 1, worin das Substrat aus einem transparenten Kunststoff gebildet ist.

8. Aufzeichnungsmedium mit hoher Dichte nach Anspruch 1, worin die Dünnfilmaufzeichnungsschicht ein dünner Film ist, der durch Wärmebehandeln eines dünnen Films erhalten wurde, wie er aus dem Behandlungsschritt des stromlosen Überziehens resultiert.

9. Aufzeichnungsmedium mit hoher Dichte nach Anspruch 1, worin das Aufzeichnungsmedium eine optische Scheibe ist.

10. Aufzeichnungsmedium mit hoher Dichte nach Anspruch 1, worin das Aufzeichnungsmedium eine optische Karte ist.

## Revendications

1. Support d'enregistrement à densité élevée, servant à enregistrer des informations à l'aide d'un faisceau laser, comprenant un substrat et une couche d'enregistrement qui est disposée sur ce substrat par dépôt chimique à partir d'une solution aqueuse, caractérisé en ce que la couche d'enregistrement est déposée à partir d'une solution contenant des ions de nickel et/ou de cobalt, d'une façon telle que la couche d'enregistrement est constituée de nickel et/ou de cobalt et a une épaisseur comprise entre environ 200 et 1000 angströms (entre 20 et 100 nm).

2. Support d'enregistrement à densité élevée suivant la revendication 1, dans lequel une couche protectrice est formée sur une surface extérieure de la couche d'enregistrement en film mince.

3. Support d'enregistrement à densité élevée suivant la revendication 2, dans lequel la couche protectrice est un film mince formé principalement d'or par dépôt chimique.

4. Support d'enregistrement à densité élevée suivant la revendication 2, dans lequel la couche protectrice est un revêtement organique.

5. Support d'enregistrement à densité élevée suivant la revendication 1, dans lequel l'enregistrement est un enregistrement d'informations numériques et/ou un enregistrement d'informations analogiques, utilisant un point ayant une dimension comprise entre une valeur inférieure au micromètre et plusieurs centaines de micromètres (10⁻¹ µm - 10³ µm).

6. Support d'enregistrement à densité élevée suivant la revendication 1, dans lequel l'enregistrement est un enregistrement vidéo.

7. Support d'enregistrement à densité élevée suivant la revendication 1, dans lequel le substrat est formé d'une matière plastique transparente.

8. Support d'enregistrement à densité élevée suivant la revendication 1, dans lequel la couche d'enregistrement en film mince est un film mince obtenu en procédant à un recuit d'un film mince résultant d'un dépôt chimique.

9. Support d'enregistrement à densité élevée suivant la revendication 1, dans lequel le support d'enregistrement est un disque optique.

10. Support d'enregistrement à densité élevée suivant la revendication 1, dans lequel le support d'enregistrement est une carte optique.
